# EUROPÄISCHE PATENTSCHRIFT

(11) **EP 3 611 814 B1**
(45) Veröffentlichungstag und Bekanntmachung des Hinweises auf die Patenterteilung: **24.03.2021**
(21) Anmeldenummer: 19188079.8
(22) Anmeldetag: 24.07.2019
(51) Int. Cl.: H02B 1/30, H02B 3/00

(54) **SOCKEL EINES SCHALTSCHRANKS**
SWITCHGEAR CABINET BASE
SOCLE D'UNE ARMOIRE DE DISTRIBUTION

(30) Priorität: 15.08.2018 DE 102018213737
(43) Veröffentlichungstag der Anmeldung: 19.02.2020
(73) Patentinhaber: Baumüller Anlagen-Systemtechnik GmbH & Co. KG, 90482 Nürnberg (DE)
(72) Erfinder:
(74) Vertreter: FDST Patentanwälte

(56) Entgegenhaltungen:
- JP-A- 2014 222 957
- JP-A- 2016 212 601
- JP-U- S55 112 288
- KR-B1- 101 780 427
- US-A1- 2017 034 935

## Beschreibung

Die Erfindung betrifft einen Sockel eines Schaltschranks sowie einen Schaltschrank mit einem Sockel.

Industrieanlagen weisen üblicherweise eine Vielzahl an rotierenden elektrischen Maschinen auf, mittels derer beispielsweise Werkzeuge oder Förderbänder angetrieben werden. Die hierfür benötigte elektrische Energie wird mittels Umrichtern bereitgestellt. Jeder Umrichter weist üblicherweise einen Gleichrichter, einen Wechselrichter und einen dazwischengeschalteten Zwischenkreiskondensator auf, der üblicherweise eine elektrische Spannung oberhalb von 200 V führt. Um eine Beschädigung des Umrichters oder einer Verletzung einer Person zu vermeiden, ist der Umrichter meist in einem Schaltschrank angeordnet. Dieser weist ein metallisches Gehäuse auf, das beispielsweise geerdet ist, sodass bei einer Berührung durch eine anwesende Person keine Verletzung zu erwarten ist.

Der Gleichrichter ist an ein Wechselstromnetz angeschlossen, welches beispielsweise drei oder zwei Phasen führt. Der Wechselrichter ist elektrisch mit dem Elektromotor kontaktiert, der meist drei Phasen aufweist. Der Wechselrichter wird üblicherweise in Abhängigkeit von bestimmten externen Signalen, beispielsweise der Drehzahl des Elektromotors und/oder weiterer Vorgaben geregelt und/oder gesteuert. Somit ist eine Vielzahl an Leitungen erforderlich, die durch das Gehäuse des Umrichters geführt werden müssen, um einen korrekten Betrieb zu ermöglichen. Hierfür weist das Gehäuse üblicherweise an dessen Unterseite eine Aussparung auf, da in diesem Bereich ein unbeabsichtigtes Berühren durch eine Person im Wesentlichen ausgeschlossen ist. Infolgedessen ist es jedoch erforderlich, dass das Gehäuse auf einem Sockel ruht, damit ein Zuführen der Leitungen zu dem Gehäuse ermöglicht ist, und die Leitungen nicht abgeklemmt werden.

Um eine Bedienung zu erleichtern, ist der Umrichter meist in einer bestimmten Höhe angeordnet, beispielsweise mindestens 1 m. Auch ist üblicherweise ein Bauraum in die Höhe vorhanden, wohingegen ein seitlicher Bauraum meist begrenzt ist. Infolgedessen ist der Schaltschrank vergleichsweise schmal und hochbauend ausgestaltet, wobei aufgrund des Sockels, der meist ein vergleichsweise geringes Gewicht aufweist, der Schwerpunkt noch weiter erhöht ist.

Zur Montage wird der Schaltschrank beispielsweise mittels eines Krans oder dergleichen an der gewünschten Stelle positioniert. Sofern jedoch die baulichen Gegebenheiten einen Einsatz eines derartigen Krans nicht zulassen, kommt meist ein Hubwagen zum Einsatz. Aufgrund des erhöhten Schwerpunkts ist es möglich, dass der Schaltschrank kippt. Daher ist es erforderlich, den Schaltschrank zu stabilisieren, beispielsweise händisch, sodass vergleichsweise viele Personen zur Montage des Schaltschranks erforderlich sind. Alternativ werden beispielsweise Spanngurte oder dergleichen verwendet. Sofern der Schaltschrank erneut versetzt werden soll, sind wiederum vergleichsweise viele Personen erforderlich, und es ist erforderlich, dass wiederum zusätzliche Hilfsmittel bereitgestellt werden.

Aus JP 2014 222957 A ist ein Gehäuse für elektrische Anwendungen, wie beispielsweise für einen Schaltschrank, bekannt. Hierbei soll bei Montage mittels einer Vorrichtung ein Umkippen in der Herstellerfirma verhindert werden.

Aus US 2017/0034935 A1 ist ein Kippschutz für ein elektronisches Rack bekannt Es sind vier Arme vorgesehen, an deren Enden jeweils ein Rad angeordnet ist, das im Normalzustand ein paar Millimeter oberhalb des Bodens angeordnet ist. Aus KR 101 780 427 B1 ist eine Vorrichtung zur Stabilisierung von Möbeln bekannt, die bei einem Umkippen des Möbelstücks aktiviert wird. Die Vorrichtung soll lösbar an dem Möbelstück montiert sein.

Der Erfindung liegt die Aufgabe zugrunde, einen besonders geeigneten Sockel eines Schaltschranks und einen besonders geeigneten Schaltschrank anzugeben, wobei zweckmäßigerweise eine Montage und auch eine Demontage und/oder Austausch nach einer vergleichsweise langen Standzeit vereinfacht ist.

Hinsichtlich des Sockels wird diese Aufgabe durch die Merkmale des Anspruchs 1 und hinsichtlich des Schaltschranks durch die Merkmale des Anspruchs 9 erfindungsgemäß gelöst. Vorteilhafte Weiterbildungen und Ausgestaltungen sind Gegenstand der jeweiligen Unteransprüche.

Der Sockel ist ein Bestandteil eines Schaltschranks. Insbesondere bildet der Sockel das in horizontaler Richtung untere Ende des Schaltschranks. Der Sockel steht im bestimmungsgemäßen Zustand vorzugsweise auf einem Boden oder einer sonstigen geeigneten Unterlage auf. Der Schaltschrank selbst weist insbesondere ein Gehäuse auf, innerhalb dessen beispielsweise elektrische und/oder elektronische Komponenten angeordnet sind. Insbesondere ist der Schaltschrank vorgesehen und eingerichtet, einen Umrichter aufzunehmen oder weist einen Umrichter auf. Mittels des Umrichters wird bevorzugt ein Elektromotor betrieben, wie ein Synchron- oder Asynchronmotor. Geeigneterweise ist der Umrichter ein Bestandteil einer Industrieanlage. Insbesondere weist der Umrichter eine maximale Leitungsabgabe zwischen 700 W und 500 kW auf. Zweckmäßigerweise ist die Leitungsabgabe größer oder gleich 1 kW, 5 kW, 10 kW, 50 kW, 100 kW oder 200 kW. Zum Beispiel ist die Leitungsabgabe kleiner oder gleich 400 kW, 250 kW, 100 kW, 50 kW, 15 kW oder 2 kW.

Alternativ oder in Kombination hierzu sind beispielsweise Sicherungsautomaten, Sicherungen, Schutzschalter und/oder Schütze in dem Schaltschrank, zweckmä-ßigerweise in dem Gehäuse, angeordnet. Vorzugsweise ist in dem Schaltschrank im bestimmungsgemäßen Zustand, vorzugsweise in dem Gehäuse, ein Schaltelement angeordnet, wie beispielsweise ein Relais oder ein Leistungshalbleiterschalter. Der Leistungshalbleiterschalter ist beispielsweise ein Feldeffekttransistor, insbesondere ein MOSFET, IGBT, oder GTO. Beispielsweise umfasst der Schaltschrank eine Kühlung, zum Beispiel eine passive Kühlung. Insbesondere umfasst der Schaltschrank einen Kühlkörper mit einer Anzahl an Kühlrippen. Alternativ oder in Kombination hierzu umfasst der Schaltschrank zumindest teilweise eine Flüssigkeitskühlung und umfasst zweckmäßigerweise Anschlüsse für eine derartige Kühlung.

Der Sockel umfasst einen Rahmen, der insbesondere der Auflage des Sockels auf einen Boden dient. Der Rahmen ist beispielsweise aus Profilleisten erstellt, die beispielsweise miteinander verschraubt und/oder verschweißt sind. Die Profilleisten sind zweckmäßigerweise aus einem Aluminium, beispielsweise eloxiertem Aluminium gefertigt. Auf dem Rahmen ruht im bestimmungsgemäßen Zustand zweckmäßigerweise das etwaige Gehäuse des Schaltschranks.

Ferner umfasst der Sockel eine Stabilisierungsleiste, die an dem Rahmen verliersicher angebunden ist. Somit ist es nicht möglich, die Stabilisierungsleiste von dem Rahmen zu entfernen. Zumindest jedoch sind zur Entfernung der Stabilisierungsleiste von dem Rahmen ein Werkzeug und/oder ein Kraftaufwand erforderlich. Die Stabilisierungsleiste ist in einer horizontalen Richtung verschieblich an dem Rahmen gelagert. Mit anderen Worten ist es ermöglicht, die Stabilisierungsleiste in horizontaler Richtung bezüglich des Rahmens zu verschieben. Die Stabilisierungsleiste selbst ist zweckmäßigerweise im Wesentlichen in horizontaler Richtung angeordnet, sodass diese im Wesentlichen in horizontaler Richtung verläuft. Geeigneterweise ist es möglich, zumindest eines der Enden der Stabilisierungsleiste in horizontaler Richtung von dem Rahmen zu beabstanden. Sofern die Stabilisierungsleiste in die entgegengesetzte Richtung verbracht wird, ist diese zweckmäßigerweise bündig mit einer äußeren Begrenzung des Rahmens. Mit anderen Worten ist die Stabilisierungsleiste ausziehbar an dem Rahmen angebunden. Vorzugsweise kann hierbei die Stabilisierungsleiste zwischen 10 cm und 30 cm, zwischen 15 cm und 25 cm oder beispielsweise um 20 cm aus dem Rahmen herausgezogen werden. Die Stabilisierungsleiste ist bevorzugt aus einem Stahlblech, zweckmäßigerweise verzinktem Stahlblech, gefertigt. Alternativ ist die Stabilisierungsleiste aus einem Aluminium, also reinem Aluminium oder einer Aluminiumlegierung, gefertigt. Somit ist ein Gewicht des Sockels verringert.

Aufgrund der Stabilisierungsleiste wird eine Auflagefläche des Sockels vergrößert und insbesondere wird auf diese Weise ein möglicher Kipppunkt des Sockels verschoben, insbesondere in horizontaler Richtung von dem Schwerpunkt des Sockels und/oder des Schaltschranks weg. Somit ist der Schaltschrank mittels der Stabilisierungsleiste vor einem Kippen geschützt. Nach erfolgter Montage wird zweckmäßigerweise die Stabilisierungsleiste erneut in horizontaler Richtung verbracht. Hierfür sind im Wesentlichen keine Werkzeuge erforderlich, sodass eine Montage vergleichsweise einfach ist. Aufgrund der verschieblichen Lagerung an dem Rahmen ist es somit ermöglicht, die vergrößerte Standfläche des Sockels erneut zu verringern, insbesondere nach erfolgtem Transport, Montage und/oder Aufstellung des Sockels sowie des Schaltschranks an dem gewünschten Ort. Somit ist ein Platzbedarf erneut verringert. An dem gewünschten Ort ist der Schaltschrank beispielsweise mittels Schrauben mit einer Wand verschraubt und somit anderweitig gegen ein Kippen gesichert. Aufgrund der verliersicheren Anbindung an dem Rahmen steht die Stabilisierungsleiste auch nach erfolgter Montage weiterhin zur Verfügung. Somit ist auch eine Demontage des Schaltschranks erleichtert. Hierfür ist es insbesondere lediglich erforderlich, die Stabilisierungsleiste in horizontaler Richtung zu verschieben. Somit steht diese auch nach einer vergleichsweise langen Standzeit wiederum zur Verfügung.

Insbesondere ist es möglich, die Stabilisierungsleiste vollständig in dem Rahmen anzuordnen. Auf diese Weise ist im Montagezustand ein Platzbedarf verringert. Geeigneterweise ist die Stabilisierungsleiste innerhalb eines hohlzylindrisch ausgestalteten Kastens des Rahmens zumindest teilweise angeordnet und mittels dessen geführt. Hierbei ist vorzugsweise ein Gleitlager zwischen der Stabilisierungsleiste und dem Kasten gebildet. Auf diese Weise sind Herstellungskosten reduziert. Zwar ist eine Reibung erhöht, jedoch wird die Stabilisierungsleiste im Wesentlichen lediglich zur Montage/Dernontage/Transport jeweils in horizontaler Richtung verbracht und ausgezogenen bzw. in den Rahmen eingebracht. Vorzugsweise umfasst der Sockel eine Blende, die zweckmäßigerweise außenseitig an dem Rahmen angebunden ist, insbesondere lösbar. Mittels der Blende ist vorzugsweise auch die Stabilisierungsleiste im Montagezustand abgedeckt. Mittels der Blende ist die Stabilisierungsleiste geeigneterweise gesichert, sodass diese bei montierter Blende nicht in horizontaler Richtung verbracht werden kann. Mittels der Blende ist eine Optik verbessert und eine Verletzungsgefahr verringert. Die Blende ist beispielsweise aus einem Blech erstellt.

Der Rahmen ist vorzugsweise quaderförmig ausgestaltet. Auf diese Weise ist eine Fertigung vereinfacht. Auch ist eine Anordnung mehrerer Sockel nebeneinander und eine Anpassung an bestehende Gegebenheiten, wie den Montageort, vereinfacht. Der Rahmen weist hierbei eine Schmalseite und eine Längsseite auf. Die Schmalseite ist hierbei im Wesentlichen lotrecht zur Längsseite angeordnet. Zweckmäßigerweise verläuft die Längsseite im Wesentlichen parallel zu einer etwaigen Tür des Schaltschranks oder einer sonstigen Öffnung des Schaltschranks, durch die eine Bedienung der innerhalb des Schaltschranks angeordneten Komponenten erfolgt. Die Stabilisierungsleiste ist zweckmäßigerweise parallel zur Schmalseite angeordnet. Vorzugsweise ist die Stabilisierungsleiste parallel zur Schmalseite verschieblich. Mit anderen Worten ist die horizontale Richtung, entlang derer die Stabilisierungsleiste verschieblich an dem Rahmen gelagert ist, parallel zur Schmalseite. Bei einer Krafteinwirkung auf den Schaltschrank ist hauptsächlich ein Verkippen um eine parallel zur Längsseite verlaufende Drehachse möglich. Aufgrund der Stabilisierungsleiste wird somit die Kippachse von dem Schwerpunkt in horizontaler Richtung wegverschoben. Die Schmalseite weist vorzugsweise eine geringere Ausdehnung in einer horizontalen Richtung auf als die Längsseite. In einer Alternative hierzu sind die Ausdehnungen in die beiden Richtungen gleich.

Die Stabilisierungsleiste ist eine Hohlprofilleiste. Auf diese Weise ist ein Gewicht reduziert. Auch ist ein Angreifen von Werkzeugen an der Stabilisierungsleiste erleichtert. Bevorzugt weist die Hohlprofilleiste eine Breite senkrecht zur horizontalen Richtung auf, die zwischen 14 cm 22 cm und beispielsweise 16 cm beträgt. Auf diese Weise ist es ermöglicht, einen Hubwagen zumindest teilweise in die Stabilisierungsleiste einzuführen, was eine Montage vereinfacht. Die Hohlprofilleiste ist vorzugsweise ein Strangpressprofil und beispielsweise aus einem Aluminium gefertigt. Auf diese Weise ist ein Gewicht verringert.

Beispielsweise weist die Hohlprofilleiste einen quaderförmigen Querschnitt auf, also senkrecht zur horizontalen Richtung, entlang derer diese verschieblich ist. Besonders bevorzugt jedoch ist der Querschnitt U-förmig. Auf diese Weise ist ein Gewicht weiter reduziert. Somit weist die Hohlprofilleiste zwei Seitenflächen und eine Bodenfläche auf, wobei mittels der Seitenflächen die zwei zueinander parallelen Schenkel des U-förmigen Querschnitts gebildet sind. Mit anderen Worten sind die Seitenflächen zueinander parallel und beabstandet angeordnet. Die Bodenfläche ist senkrecht zu den beiden Seitenflächen angeordnet. Beispielsweise ist der U-förmige Querschnitt nach oben geöffnet. Somit ist eine vergleichsweise große Auflagefläche der Stabilisierungsleiste gegeben. Besonders bevorzugt jedoch ist der U-förmige Querschnitt nach unten geöffnet. Folglich befindet sich die Bodenfläche an der Oberseite der Hohlprofilleiste. Somit ist es ermöglicht, die Stabilisierungsleiste in horizontaler Richtung zu verschieben, ohne dass ein Boden beschädigt wird, wie verkratzt. Auch ist es ermöglicht, in die Stabilisierungsleiste eine Gabel eines Gabelstaplers oder eines Hubwagen zumindest teilweise einzuführen und somit den Sockel anzuheben. Auf diese Weise sind eine Montage und ein sonstiges Versetzen des Sockels vereinfacht.

Beispielsweise ist die Hohlprofilleiste unterseitig vollständig offen. Besonders bevorzugt jedoch umfasst der Rahmen eine Sicherungsplatte, die unterseitig der Hohlprofilleiste angeordnet ist. Zweckmäßigerweise ist die Sicherungsplatte starr an weiteren Bestandteilen des Rahmens befestigt. Bei einem Verschieben der Stabilisierungsleiste wird die Sicherungsplatte somit nicht bewegt. Die Sicherungsplatte steht zweckmäßigerweise bezüglich weiterer Bestandteil des Rahmens nicht über. Somit sind auch bei eingeschobener Hohlprofilleiste die Sicherungsplatten von einem Nutzer nicht sichtbar und dieser kann sich somit nicht an der Sicherungsplatte stoßen. Aufgrund der Sicherungsplatte ist ein Verkippen weiter verhindert, insbesondere sofern ein Hubwagen oder Gabelstapler herangezogen wird. Hierbei wird die Gabel des Hubwagens/Gabelstaplers zweckmäßigerweise zwischen der Bodenfläche der Hohlprofilleiste und der Sicherungsplatte in horizontaler Richtung angeordnet.

Beispielsweise ist die Hohlprofilleiste unversehrt ausgestaltet. Besonders bevorzugt jedoch weist die Hohlprofilleiste an deren Bodenfläche des U-förmigen Querschnitts, also an deren Oberseite, eine Aussparung auf. Hierbei wird der Kippschutz nicht beeinträchtigt, da dieser im Wesentlichen mittels der Seitenflächen der Hohlprofilleiste bereitgestellt ist. Mittels der Aussparung ist ein Einführen von Kabeln oder sonstigen Leitungen ermöglicht, beispielsweise wenn die Stabilisierungsleiste im Wesentlichen vollständig innerhalb des Rahmens angeordnet ist. Die Aussparung ist zweckmäßigerweise umlaufend geschlossen ausgestaltet, was eine mechanische Integrität erhöht. Im Montagezustand verlaufen zweckmäßigerweise zumindest eine Anzahl an Kabeln oder sonstigen Leitungen durch die Aussparung hindurch.

Vorzugsweise umfasst die Hohlprofilleiste ein in der horizontalen Richtung verlaufendes Langloch. Zweckmäßigerweise umfasst zumindest eine der Seitenwände der Hohlprofilleiste das Langloch. Das Langloch ist insbesondere mittels Stanzen erstellt. Innerhalb des Langlochs liegt bevorzugt ein Bolzen ein, der an dem Rahmen fest montiert ist. Der Bolzen ist zweckmäßigerweise mit dem Rahmen oder mit einem an dem Rahmen angebundenen Bauteil verschweißt. Beispielsweise ist zwischen dem Bolzen und dem Langloch eine Spielpassung gebildet, oder der Bolzen weist einen geringeren Durchmesser als die Breite des Langlochs auf. Mittels des Bolzens und des Langlochs wird bei Betrieb zweckmäßigerweise die Hohlprofilleiste in der horizontalen Richtung geführt, was ein Ausziehen der Stabilisierungsleiste vereinfacht. Auch wird mittels des Langlochs die Bewegung der Stabilisierungsleiste in horizontaler Richtung begrenzt. Mit anderen Worten wird ein Anschlag mittels des Bolzens und des Langlochs gebildet. Somit ist eine Bedienung vereinfacht. Vorzugsweise umfasst der Bolzen einen Kopf, der eine größere Ausdehnung als die Breite des Langlochs aufweist. Somit ist ein Entfernen der Stabilisierungsleiste mittels des Bolzens unterbunden. Der Kopf ist beispielsweise einstückig mit einem Schaft des Bolzens oder mittels einer Mutter oder dergleichen bereitgestellt. Zusammenfassend erfolgt mittels des Bolzens und des Langlochs ein Führen und Lagern der Stabilisierungsleiste. Zweckmäßigerweise umfasst die Hohlprofilleiste zwei derartige Langlöcher, die geeigneterweise zueinander parallel und beispielsweise deckungsgleich, jedoch in unterschiedliche Seitenwände eingebracht sind. Hierbei ist in jedem der Langlöcher beispielsweise ein Bolzen angeordnet, oder der Bolzen reicht durch beide Langlöcher hindurch.

Der Sockel umfasst eine zweite Stabilisierungsleiste, die an dem Rahmen verliersicher angebunden und in der horizontalen Richtung verschieblich an dem Rahmen gelagert ist. Hierbei ist es vorzugsweise möglich, die zweite Stabilisierungsleiste aus dem Rahmen herauszuziehen und erneut in diese hinein zu verbringen. Die zweite Stabilisierungsleiste ist hierbei zumindest teilweise in die Stabilisierungsleiste gesteckt. Zum Beispiel ist es möglich, die zweite Stabilisierungsleiste auf der der Stabilisierungsleiste gegenüberliegenden Seite aus dem Rahmen herauszuziehen. Aufgrund der zweiten Stabilisierungsleiste ist eine Standfläche weiter vergrößert und somit auch eine Stabilität des Sicherungskastens bei einem Transport und/oder Montage. Da die zweite Stabilisierungsleiste zumindest teilweise in die Stabilisierungsleiste gesteckt ist, ist hierbei Platzbedarf verringert. Sofern die beiden Stabilisierungsleiste in den Rahmen hineingeschoben sind, ist die zweite Stabilisierungsleiste beispielsweise im Wesentlichen vollständig innerhalb der Stabilisierungsleiste angeordnet. Beispielsweise ist es möglich, eine Gabel eines Gabelstaplers oder Hubwagen durch die Stabilisierungsleiste in die zweite Stabilisierungsleiste einzuführen. Zweckmäßigerweise ist es möglich, die zweite Stabilisierungsleiste unabhängig von der Stabilisierungsleiste zu verschieben. Somit ist es auch möglich, den Sockel an eine Wand zu verbringen und beispielsweise die zweite Stabilisierungsleiste in dem Rahmen anzuordnen, wohingegen die Stabilisierungsleiste aus dem Rahmen herausragt. Vorzugsweise liegt hierbei die zweite Stabilisierungsleisten endseitig direkt an der Wand an.

Vorzugsweise erfolgt die Führung der zweiten Stabilisierungsleiste mittels des gleichen Kastens, mittels dessen die Stabilisierungsleiste geführt ist, sofern dieser vorhanden ist. Beispielsweise ist die zweite Stabilisierungsleiste massiv ausgestaltet. Besonders bevorzugt jedoch ist die zweite Stabilisierungsleiste ebenfalls eine Hohlprofilleiste. Insbesondere ist eine zweite Sicherungsplatte vorhanden, die unterseitig der zweiten Stabilisierungsleiste angeordnet ist, sofern diese den U-förmigen Querschnitt aufweist. Zweckmäßigerweise weist die zweite Stabilisierungsleiste ebenfalls ein Langloch auf, innerhalb dessen beispielsweise der Bolzen einliegt, der auch in dem Langloch der Stabilisierungsleiste einliegt, sofern dieses vorhanden ist. Somit sind mittels des gleichen Bolzens sowohl die Stabilisierungsleiste als auch die zweite Stabilisierungsleiste gelagert. In einer alternativen Ausgestaltungsform ist beispielsweise an der Stabilisierungsleiste der Bolzen angebunden, insbesondere angeformt, der in das Langloch der zweiten Stabilisierungsleiste eingreift. Somit sind die beiden Stabilisierungsleisten aneinander gelagert. Hierbei ist vorzugsweise an der zweiten Stabilisierungsleiste ebenfalls ein Bolzen angebunden, beispielsweise angeformt, der in dem Langloch der Stabilisierungsleiste einliegt. Auf diese Weise ist eine Stabilität erhöht.

Zweckmäßigerweise umfasst der Sockel eine dritte Stabilisierungsleisten, die an dem Rahmen verliersicher angebunden und in der horizontalen Richtung verschieblich an dem Rahmen gelagert ist. Insbesondere ist es möglich, die dritte Stabilisierungsleiste im Wesentlichen vollständig innerhalb des Rahmens anzuordnen und aus diesem zumindest teilweise mittels verschieben zu entfernen. Die dritte Stabilisierungsleiste ist bezüglich der Stabilisierungsleiste senkrecht zur horizontalen Richtung versetzt und befindet sich in vertikaler Richtung zweckmäßigerweise in gleicher Höhe wie die Stabilisierungsleiste. Zweckmäßigerweise ist die dritte Stabilisierungsleiste im Wesentlichen parallel zur Stabilisierungsleiste ausgerichtet. Vorzugsweise ist die dritte Stabilisierungsleiste unabhängig von der Stabilisierungsleiste verschieblich. Mittels der dritten Stabilisierungsleiste sind der Sockel sowie der Schaltschrank weiter stabilisiert. Zweckmäßigerweise ist der Abstand zwischen der Stabilisierungsleiste und der dritten Stabilisierungsleiste zwischen 20 cm und 24 cm und beispielsweise im Wesentlichen gleich 22 cm. Dieser Abstand entspricht insbesondere der Gabelweite eines Gabelstaplers oder Hubwagen, sodass der Sockel mittels Einschieben der Gabel in die dritte Stabilisierungsleiste und die Stabilisierungsleiste angehoben werden kann. Zweckmäßigerweise ist die dritte Stabilisierungsleiste im Wesentlichen baugleich zur Stabilisierungsleiste ausgestaltet und vorzugsweise eine Hohlprofilleiste. Die dritte Stabilisierungsleiste weist insbesondere den U-förmigen Querschnitt auf, der nach unten geöffnet ist. Geeigneterweise ist zusätzlich eine dritte Sicherungsplatte vorhanden.

Vorzugsweise ist die zweite Stabilisierungsleiste vorhanden, und der Sockel weist eine vierte Stabilisierungsleiste auf, die an dem Rahmen verliersicher angebunden und in der horizontalen Richtung verschieblich an dem Rahmen gelagert ist, und die zumindest teilweise in die dritte Stabilisierungsleiste gesteckt ist. Vorzugsweise weist die dritte Stabilisierungsleiste ein in der horizontalen Richtung verlaufendes Langloch auf, innerhalb derer ein an dem Rahmen fest montierter dritter Bolzen einliegt. Somit ist eine Lagerung der dritten Stabilisierungsleiste im Wesentlichen baugleich zur Lagerung der Stabilisierungsleiste.

Der Schaltschrank weist ein Gehäuse auf, das beispielsweise aus einem Metall gefertigt ist. Das Gehäuse umfasst insbesondere eine oder zwei Türen, die zum Beispiel verschließbar ausgestaltet sind. Das Gehäuse dient insbesondere der Aufnahme eines Umrichters oder sonstige elektrische/elektronische Komponenten, wie Sicherungen oder Leistungshalbleiterschaltern. Das Gehäuse ruht auf einem Sockel und ist an diesem befestigt. Mit anderen Worten befindet sich das Gehäuse in vertikaler Richtung oberhalb des Sockels. Beispielsweise ist der Sockel mit dem Gehäuse verschraubt oder verschweißt. Der Sockel umfasst einen Rahmen und eine Stabilisierungsleiste, die an dem Rahmen verliersicher angebunden und in einer horizontalen Richtung verschieblich an dem Rahmen gelagert ist. Vorzugsweise ist das Gehäuse des Schaltschranks an dem Rahmen befestigt.

Sofern ein Bauteil als erstes, zweites, drittes,... Bauteil bezeichnet wird, ist insbesondere lediglich darunter ein bestimmtes Bauteil zu verstehen. Insbesondere bedeutet dies nicht, dass eine bestimmte Anzahl an derartigen Bauteilen vorhanden ist. So impliziert insbesondere nicht, dass die zweite Stabilisierungsleiste vorhanden ist, sofern die dritte Stabilisierungsleiste vorhanden ist.

Die im Zusammenhang mit dem Sockel genannten Vorteile und Weiterbildungen sind sinngemäß auch auf den Schaltschrank zu übertragen und umgekehrt.

Nachfolgend werden Ausführungsbeispiele der Erfindung anhand einer Zeichnung näher erläutert. Darin zeigen:
- Fig.1: schematisch einen Schaltschrank mit einem Sockel,
- Fig. 2, 3: jeweils perspektivisch den Sockel mit insgesamt vier ausgezogenen Stabilisierungsleisten,
- Fig. 4: in einer Draufsicht auf die Längsseite den Sockel,
- Fig. 5: in einer Draufsicht auf die Schmalseite den Sockel,
- Fig. 6: perspektivisch ausschnittsweise zwei der Stabilisierungsleisten, und
- Fig. 7: perspektivisch eine weitere Ausführungsform der Stabilisierungsleisten.

Einander entsprechende Teile sind in allen Figuren mit den gleichen Bezugszeichen versehen.

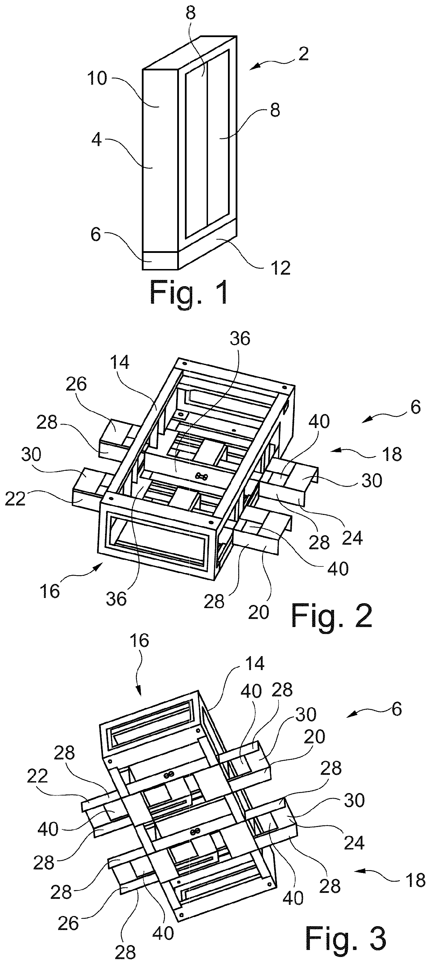

In Figur 1 ist schematisch vereinfacht perspektivisch ein Schaltschrank 2 mit einem Gehäuse 4 gezeigt, das in einer vertikalen Richtung oberhalb eines Sockels 6 angeordnet und an diesem befestigt ist, beispielsweise mittels Schweißen. Das Gehäuse 4 weist zwei Türen 8 auf, die schwenkbar an einem Gehäusegrundkörper 10 befestigt sind. Die Türen 8 und der Gehäusegrundkörper 10 sind aus einem Metall erstellt und im Montagezustand elektrisch mit Masse verbunden. Innerhalb des Gehäuses 4 ist ein nicht näher dargestellter Umrichter angeordnet, mittels dessen ein Elektromotor einer Industrieanlage bestromt wird. Somit ist der Schaltschrank 2 ebenfalls ein Bestandteil der Industrieanlage.

Der Sockel 6 weist eine umlaufende Blende 12 auf, die aus einem Blech gefertigt und auf einen in Figur 2 und Figur 3 gezeigten Rahmen 14 umlaufende aufgebracht ist. Der Rahmen 14 und somit auch der Sockel 6 ist in Figur 2 perspektivisch von oben und in Figur 3 perspektivisch von unten gezeigt.

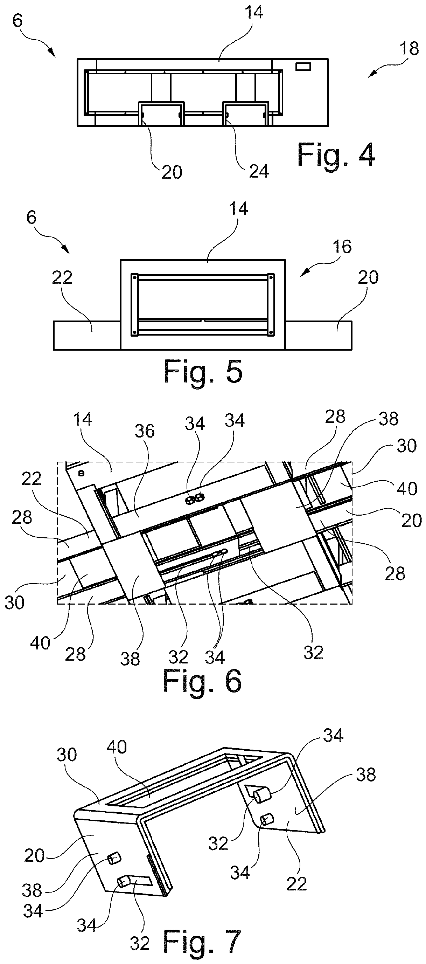

Der Rahmen 14 ist aus Profilleisten gefertigt, die aus einem Aluminium erstellt sind. Hierbei sind die Profilleisten derart angeordnet, dass der Rahmen 14 quaderförmigen ist und eine Schmalseite 16 und eine Längsseite 18 aufweist. Die Längsseite 18 weist eine größere Ausdehnung in horizontaler Richtung als die Schmalseite 16 auf, in die sich die jeweilige Seite erstreckt. In Figur 4 ist der Sockel 6 in einer Draufsicht auf die Längsseite 18 und in Figur 5 in einer Draufsicht auf die Schmalseite 16 gezeigt. Der Sockel 6 weist ferner eine Stabilisierungsleiste 20, eine zweite Stabilisierungsleiste 22, eine dritte Stabilisierungsleiste 24 und eine vierte Stabilisierungsleiste 26 auf. Die Stabilisierungsleiste 20 ist baugleich zur dritten Stabilisierungsleiste 24, und die zweite Stabilisierungsleiste 22 ist baugleich zur vierten Stabilisierungsleiste 26. Die Stabilisierungsleisten 20, 22, 24, 26 sind parallel zur Schmalseite 16 ausgerichtet und jeweils Hohlprofilleisten, die aus einem eloxiertem Aluminium erstellt sind.

Die Hohlprofilleisten 20, 22, 24, 26 weisen einen U-förmigen Querschnitt auf, der nach unten geöffnet ist. Somit weist jede der Hohlprofilleisten 20, 22, 24, 26 jeweils zwei zueinander parallelen Seitenflächen 28 und eine dazwischen angeordneten Bodenfläche 30 auf. Die Seitenflächen 28 weisen zueinander einen Abstand von 16 cm auf. Die Seitenflächen 28 sind vertikal ausgerichtet, und die Bodenfläche 30 ist horizontal ausgerichtet. In jeder der Seitenflächen 28 ist jeweils ein in horizontaler Richtung verlaufendes Langloch 32 eingebracht, innerhalb derer jeweils zwei Bolzen 34 unter Ausbildung einer Spielpassung einliegen. Die Bolzen 34 sind fest an einem Kasten 36 montiert, der aus einem Blech gebogen und an den Profilleisten des Rahmens 14 befestigt ist. Der Kasten 36 ist an dem Rahmen 14 befestigt oder ein Teil des Rahmens 14. Somit sind die Bolzen 34 fest an dem Rahmen 14 montiert.

Der Sockel 6 weist dabei 2 Kästen 36 auf, wobei einer der Stabilisierungsleiste 20 und der weitere der dritten Stabilisierungsleiste 24 zugeordnet ist.

Jeder Kasten 36 ist hohlzylindrisch oder U-förmig ausgestaltet, und parallel zur Stabilisierungsleiste 20 angeordnet, die in dem zugeordneten zumindest teilweise einliegt. Die Stabilisierungsleiste 20 ist somit mittels des Kastens 36 geführt, und mittels der Bolzen 34 verliersicher an dem Rahmen 14 angebunden. Mittels des Langlochs 32, der Bolzen 34 und des Kastens 36 ist dabei die Stabilisierungsleisten 20 in horizontaler Richtung verschieblich an dem Rahmen 14 gelagert, sodass diese aus dem Rahmen herausgezogen werden kann, wie in den Figuren 2 bis 6 gezeigt.

Die zweite Stabilisierungsleiste 22 ist teilweise in die Stabilisierungsleiste 20 gesteckt, wobei die Bolzen 34, die in dem Langloch 32 der Stabilisierungsleiste 20 einliegen auch in den Langlöchern 32 der zweiten Stabilisierungsleiste 22 einliegen. Somit ist auch die zweite Stabilisierungsleiste 22 an dem Rahmen 14 verliersicher angebunden und in der horizontalen Richtung verschieblich an dem Rahmen 14 gelagert. Hierbei erfolgt eine umfangsseitige Stabilisierung der zweiten Stabilisierungsleiste 22 doch hauptsächlich mittels der Stabilisierungsleiste 20.

Die Stabilisierungsleiste 20 und die zweite Stabilisierungsleiste 22 können auf unterschiedlichen Seiten, also senkrecht zur Längsseite 18 aus dem Rahmen 14 unabhängig voneinander herausgezogen oder in diesen hineingeschoben werden. Die 3. Stabilisierungsleisten 24 und die 4. Stabilisierungsleisten 28 sind mittels des zugeordneten Kastens 36, der Langlöcher 32 sowie der zugeordneten Bolzen 34 entsprechend der Stabilisierungsleiste 20 sowie der zweiten Stabilisierungsleiste 22 in horizontaler Richtung verschieblich an dem Rahmen 14 gelagert und verliersicher befestigt. Die dritte Stabilisierungsleiste 24 und somit auch die vierte Stabilisierungsleisten 26 ist senkrecht zur Erstreckungsrichtung der Stabilisierungsleisten 20, 22, 24, 26, also senkrecht zur horizontalen Richtung versetzt, wobei zwischen der Stabilisierungsleiste 20 und der dritten Stabilisierungsleiste 24 ein Abstand von 22 cm gebildet ist. Somit ist die dritte Stabilisierungsleiste 24 bezüglich der Stabilisierungsleiste 20 senkrecht zur horizontalen Richtung versetzt.

Zusammenfassend sind die Stabilisierungsleisten 20, 22, 24, 26 parallel zur Schmalseite 16 angeordnet, also senkrecht zur Längsseite 18. Die Stabilisierungsleisten 20, 22, 24, 26 können senkrecht zur Längsseite 18 aus dem Rahmen 14 heraus oder in diesen hinein bewegt werden.

Für den Transport des Schaltschranks 2 wird zunächst die Blende 12 entfernt und die Stabilisierungsleisten 20, 22, 24, 26 aus dem Rahmen 14 teilweise herausgezogen. Mittels der Langlöcher 32 und der Bolzen 34 wird hierbei das Herausziehen begrenzt. Im Anschluss hieran wird eine Gabel eines Hubwagens oder Gabelstapler in die Stabilisierungsleisten 20, 22, 24, 26 eingeführt und der vollständige Schaltschrank 2 angehoben und an den gewünschten Ort transportiert. Aufgrund der ausgezogenen Stabilisierungsleisten 20, 22, 24, 26 ist eine Auflagefläche auf der Gabel des Gabelstapler/Hubwagens vergrößert, sodass ein Kippen des Schaltschranks 2 vermieden ist. Hierbei ist auch eine Anordnung des Schaltschranks 2 an einer Wand ermöglicht. Hierfür werden beispielsweise die zweite Stabilisierungsleiste 22 und die vierte Stabilisierungsleiste 26 in den Rahmen 14 hineingeschoben, sodass die dortige Längsseite 18 bündig an der Wand positioniert werden kann. Mittels der noch ausgezogenen Stabilisierungsleiste 20 und der dritten Stabilisierungsleiste 24 wird auch bei der letzten Annäherung an die Wand ein Kippen vermieden.

Nach erfolgtem Absetzen des Schaltschranks 2 werden die Stabilisierungsleisten 20, 22, 24, 26 in den Rahmen 14 eingeschoben, sodass diese im Wesentlichen bündig mit den Außenflächen sind. Im Anschluss hieran wird die Blende 12 montiert und somit die Stabilisierungsleisten 20, 22, 24, 26 verdeckt. Bei einem Umsetzen des Schaltschranks 2 ist es lediglich erforderlich, die Blende 12 zu entfernen und erneut die Stabilisierungsleisten 20, 22, 24, 26 aus dem Rahmen 14 herauszuziehen. Die Stabilisierungsleisten 20, 22, 24, 26 stehen dabei im Wesentlichen stets zur Verfügung, sodass jederzeit ein Umsetzen des Schaltschranks 2 erfolgen kann.

Der Rahmen 14 weist ferner vier Sicherungsplatten 38 auf, von denen jeweils eine einer der Stabilisierungsleisten 20, 22, 24, 26 zugeordnet ist. Mittels der Sicherungsplatten 38 sind die Kästen 36 an deren Unterseite zumindest teilweise verschlossen, wobei jedem der Kästen 36 jeweils zwei der Sicherungsplatten 38 zugeordnet sind. Diese sind an einem Randbereich angeordnet und befinden sich unterhalb der jeweiligen Stabilisierungsleisten 20, 22, 24, 26. Bei einem Transport wird die Gabel des Hubwagens bzw. Gabelstaplers oberhalb der Sicherungsplatten 38 in die Stabilisierungsleisten 20, 22, 24, 26 eingeführt. Mittels der Sicherungsplatten 38 erfolgt ein zusätzlicher Schutz vor einem Verkippen. Hierbei ist es möglich, die Sicherungsplatten 38 vergleichsweise filigran auszufertigen, beispielsweise aus einem Blech, da ein Großteil eines etwaigen auf den Schaltschrank 2 wirkenden Drehmoments mittels der Stabilisierungsleisten 20, 22, 24, 26 aufgenommen wird.

In jede Bodenfläche 30 jeder Stabilisierungsleiste 20, 22, 24, 26 ist eine Aussparung 40 eingebracht, die jeweils umfangsseitig geschlossen ausgestaltet ist. Im Montagezustand sind durch die Aussparungen 40 Leitungen und/oder Kabel geführt. Somit behindern die Stabilisierungsleisten 20, 22, 24, 26 die Anbindung der Kabel/Leitungen nicht. Auch ist es möglich, Kabel durch die Stabilisierungsleisten 20, 22, 24, 26 in den Rahmen 14 hinein und durch die Aussparungen 40 in vertikaler Richtung nach oben zu dem Gehäuse 4 zu führen.

In Figur 7 ist eine alternative Ausgestaltungsform der Stabilisierungsleiste 20 sowie der zweiten Stabilisierungsleiste 22 gezeigt. Die dritte und vierte Stabilisierungsleiste 24, 26 sind entsprechend ausgestaltet. Die Stabilisierungsleisten 20, 22 weisen wiederum den U-förmigen Querschnitt auf, der nach unten offen ist. Auch weist jede Bodenfläche 30 wiederum die Aussparung 40 auf, die im eingeschobenen Zustand miteinander fluchten. Auch ist in jede der Seitenflächen 38 jeweils ein Langloch 32 eingebracht, die jedoch in vertikaler Richtung zueinander beabstandet sind und unterschiedliche Ausdehnungen aufweisen. Somit sind die Langlöcher 32 nicht mehr wie im vorhergehenden Ausführungsbeispiel zueinander deckungsgleich. An der Stabilisierungsleiste 20 sind zwei nach innen gerichtete Bolzen 34 angebunden, die in den Langlöchern 32 der zweiten Stabilisierungsleiste 22 einliegen. An der zweiten Stabilisierungsleiste 22 sind zwei nach außen gerichtete Bolzen 34 angebunden, die in den Langlöchern 32 der Stabilisierungsleiste 20 einliegen. Somit sind die beiden Stabilisierungsleisten 20, 22 aneinander gelagert und können beispielsweise als eine Baueinheit montiert werden.

Zusammenfassend sind in dem Sockel 6 des Schaltschranks 2 nach beiden Seiten ausziehbare U-Profile installiert, also die Stabilisierungsleisten 20, 22, 24, 26. Die Stabilisierungsleisten 20, 22, 24, 26 sind mittels der Langlöcher 32, die insbesondere eingestanzt sind, sowie der Bolzen 34 gegeneinander stabilisiert. Die Bolzen 34 sind zweckmäßigerweise mit dem Rahmen 14 verschweißt, beispielsweise mit dem jeweiligen Kasten 36. Die Stabilisierungsleisten 20, 22, 24, 26 können dabei unabhängig voneinander aus dem Rahmen 14 herausgezogen werden. Insbesondere können die Stabilisierungsleisten 20, 22, 24, 26 um 20 cm aus dem Rahmen 14 herausgezogen werden. Aufgrund der Stabilisierungsleisten 20, 22, 24, 26 ist eine Transportsicherung realisiert, und es ist ein sicherer Transport des Schaltschranks 2 ermöglicht, auch wenn dieser einen vergleichsweise hohen Schwerpunkt aufweist. Mittels der ausgezogenen Stabilisierungsleisten 20, 22, 24, 26 ist nämlich eine um ca. 40 cm erhöhte Auflagefläche realisiert.

Nach erfolgter Aufstellung werden die Stabilisierungsleisten 20, 22, 24, 26 erneut eingeschoben und mit der Blende 12, also einem Abdeckblech, verdeckt. Die Stabilisierungsleisten 20, 22, 24, 26 verbleiben im Rahmen 14, und aufgrund der Aussparungen 40 ist ein nahezu ungehinderter Zugang mit Anschlusskabeln von der Unterseite her gegeben. Wenn der Schaltschrank 2 an einer Wand platziert werden soll, können die rückwerktätigen Stabilisierungsleisten 20, 22, 24, 26 eingeschoben werden und der Schaltschrank 2 mit dem Gabelstapler/Hubwagen an die Wand geschoben werden. Bei einem erneuten Transport des Schaltschranks 2 befinden sich die Stabilisierungsleisten 20, 22, 24, 26 auch nach vielen Jahren des Betriebs immer noch vor Ort und können erneut verwendet werden.

Die Erfindung ist nicht auf die vorstehend beschriebenen Ausführungsbeispiele beschränkt. Vielmehr können auch andere Varianten der Erfindung von dem Fachmann hieraus abgeleitet werden, solange sie in den Schutzbereich der Ansprüche fallen.

### Bezugszeichenliste

- 2: Schaltschrank
- 4: Gehäuse
- 6: Sockel
- 8: Tür
- 10: Gehäusegrundkörper
- 12: Blende
- 14: Rahmen
- 16: Schmalseite
- 18: Längsseite
- 20: Stabilisierungsleiste
- 22: zweite Stabilisierungsleiste
- 24: dritte Stabilisierungsleiste
- 26: vierte Stabilisierungsleiste
- 28: Seitenfläche
- 30: Bodenfläche
- 32: Langloch
- 34: Bolzen
- 36: Kasten
- 38: Sicherungsplatte
- 40: Aussparung

## Patentansprüche

1. Sockel (6) eines Schaltschranks (2), mit einem Rahmen (14), und mit einer Stabilisierungsleiste (20), die an dem Rahmen (14) verliersicher und ausziehbar angebunden und in einer horizontalen Richtung verschieblich an dem Rahmen (14) gelagert ist, und mit einer zweiten Stabilisierungsleiste (22) die an dem Rahmen (14) verliersicher angebunden und in der horizontalen Richtung verschieblich an dem Rahmen (14) gelagert ist, **dadurch gekennzeichnet, dass** die Stabilisierungsleiste (20) eine Hohlprofilleiste ist, und die die zweite Stabilisierungsleiste zumindest teilweise in die Stabilisierungsleiste (20) gesteckt ist

2. Sockel (6) nach Anspruch 1,
**dadurch gekennzeichnet,**
**dass** der Rahmen (14) quaderförmig ist und eine Schmalseite (16) und eine Längsseite (18) aufweist, wobei die Stabilisierungsleiste (20) parallel zur Schmalseite (16) angeordnet ist.

3. Sockel (6) nach Anspruch 1 oder 2,
**dadurch gekennzeichnet,**
**dass** die Hohlprofilleiste (20) einen U-förmigen Querschnitt aufweist, der nach unten geöffnet ist.

4. Sockel (6) nach Anspruch 3,
**dadurch gekennzeichnet,**
**dass** der Rahmen (14) eine Sicherungsplatte (38) aufweist, die unterseitig der Hohlprofilleiste (20) angeordnet ist.

5. Sockel (6) nach Anspruch 3 oder 4,
**dadurch gekennzeichnet,**
**dass** die Hohlprofilleiste (20) an deren Bodenfläche (30) eine Aussparung (40) aufweist.

6. Sockel (6) nach einem der Ansprüche 1 bis 5,
**dadurch gekennzeichnet,**
**dass** die Hohlprofilleiste (20) ein in der horizontalen Richtung verlaufendes Langloch (32) aufweist, innerhalb derer ein an dem Rahmen (14) fest montierter Bolzen (34) einliegt.

7. Sockel (6) nach einem der Ansprüche 1 bis 6,
**gekennzeichnet durch**
eine dritte Stabilisierungsleiste (24), die an dem Rahmen (14) verliersicher angebunden und in der horizontalen Richtung verschieblich an dem Rahmen (14) gelagert ist, und die bezüglich der Stabilisierungsleiste (20) senkrecht zur horizontalen Richtung versetzt ist, wobei der Abstand zwischen der Stabilisierungsleiste (20) und der dritte Stabilisierungsleiste (24) insbesondere zwischen 20cm und 24 cm, bevorzugt 22cm, ist.

8. Sockel (6) nach Anspruch 7,
**gekennzeichnet durch**
eine vierte Stabilisierungsleiste (26), die an dem Rahmen (14) verliersicher angebunden und in der horizontalen Richtung verschieblich an dem Rahmen (14) gelagert ist, und die zumindest teilweise in die dritte Stabilisierungsleiste (24) gesteckt ist

9. Schaltschrank (2), mit einem Gehäuse (4), das an einem Sockel (6) nach einem der Ansprüche 1 bis 8 befestigt ist.

## Claims

1. Socket (6) of a control cabinet (2), with a frame (14), and with a stabilizing bar (20), said stabilizing bar (20) being captively and extendably connected to the frame (14) and displaceably mounted on the frame (14) in a horizontal direction, and with a second stabilizing bar (22), which is captively connected to the frame (14) and displaceably mounted on the frame (14) in the horizontal direction,
**characterized in**
**that** the stabilizing bar (20) is a hollow profile bar, and the second stabilizing bar is at least partially inserted into the stabilizing bar (20).

2. Socket (6) according to claim 1,
**characterized in**
**that** the frame (14) is cuboid and has a narrow side (16) and a longitudinal side (18), the stabilizing bar (20) being arranged parallel to the narrow side (16).

3. Socket (6) according to claim 1 or 2,
**characterized in**
**that** the hollow profile bar (20) has a U-shaped cross-section, which is opened downwards.

4. Socket (6) according to claim 3,
**characterized in**
**that** the frame (14) has a securing plate (38), which is arranged on the underside of the hollow profile bar (20).

5. Socket (6) according to claim 3 or 4,
**characterized in**
**that** the hollow profile bar (20) has a recess (40) on its bottom surface (30).

6. Socket (6) according to one of claims 1 to 5,
**characterized in**
**that** the hollow profile bar (20) has an elongated hole (32) extending in the horizontal direction, within which a bolt (34) firmly mounted on the frame (14) is inserted.

7. Socket (6) according to one of claims 1 to 6,
**characterized by**
a third stabilizing bar (24), which is captively connected to the frame (14) and is displaceably mounted on the frame (14) in the horizontal direction, and which is offset with respect to the stabilizing bar (20) perpendicular to the horizontal direction, the distance between the stabilizing bar (20) and the third stabilizing bar (24) being in particular between 20cm and 24 cm, preferably 22cm.

8. Socket (6) according to claim 7,
**characterized by**
a fourth stabilizing bar (26), which is captively connected to the frame (14) and is displaceably mounted on the frame (14) in the horizontal direction, and which is at least partially inserted into the third stabilizing bar (24)

9. Control cabinet (2), with a housing (4), which is fastened to a socket (6) according to one of claims 1 to 8.

## Revendications

1. Socle (6) d'une armoire de distribution (2), avec un cadre (14), et avec une barre de stabilisation (20) reliée au cadre (14) de manière imperdable et extensible, qui est montée sur le cadre (14) de manière à pouvoir être déplacée dans une direction horizontale, et avec une deuxième barre de stabilisation (22), qui est reliée de manière imperdable au cadre (14) et qui est montée de manière à pouvoir être déplacée dans la direction horizontale,
**caractérisé en ce**
**que** la barre de stabilisation (20) est une barre de profilé creux et la deuxième barre de stabilisation est insérée au moins partiellement dans la barre de stabilisation (20).

2. Socle (6) selon la revendication 1,
**caractérisé en ce**
**que** le cadre (14) est parallélépipédique et comporte un côté étroit (16) et un côté longitudinal (18), la barre de stabilisation (20) étant disposée parallèlement au côté étroit (16).

3. Socle (6) selon la revendication 1 ou 2,
**caractérisé en ce**
**que** la barre de profilé creux (20) comporte une section transversale en forme d'U, qui est ouverte vers le bas.

4. Socle (6) selon la revendication 3,
**caractérisé en ce**
**que** le cadre (14) comporte une plaque de fixation (38) disposée sur la face inférieure de la barre de profilé creux (20).

5. Socle (6) selon la revendication 3 ou 4,
**caractérisé en ce**
**que** la barre de profilé creux (20) comporte un évidement (40) sur sa surface inférieure (30).

6. Socle (6) selon l'une des revendications 1 à 5,
**caractérisé en ce**
**que** la barre de profilé creux (20) comporte un trou allongé (32) s'étendant dans la direction horizontale, dans lequel est inséré un boulon (34) monté de manière fixe sur le cadre (14).

7. Socle (6) selon l'une quelconque des revendications 1 à 6,
**caractérisé par**
une troisième barre de stabilisation (24), qui est reliée au cadre (14) de manière imperdable et qui est montée sur le cadre (14) de manière à pouvoir être déplacée dans la direction horizontale, et qui est décalée par rapport à la barre de stabilisation (20) perpendiculairement à la direction horizontale, la distance entre la barre de stabilisation (20) et la troisième barre de stabilisation (24) étant en particulier comprise entre 20 cm et 24 cm, de préférence 22 cm.

8. Socle (6) selon la revendication 7,
**caractérisé par**
une quatrième barre de stabilisation (26), qui est reliée au cadre (14) de manière imperdable et qui est montée sur le cadre (14) de manière à pouvoir être déplacée dans la direction horizontale, et qui est au moins partiellement insérée dans la troisième barre de stabilisation (24)

9. Armoire de distribution (2), avec un boîtier (4) fixé à un socle (6) selon l'une des revendications 1 à 8.
